# EUROPÄISCHE PATENTSCHRIFT

(11) **EP 0 384 885 B1**
(45) Veröffentlichungstag und Bekanntmachung des Hinweises auf die Patenterteilung: **06.07.1994**
(21) Anmeldenummer: 90810044.9
(22) Anmeldetag: 19.01.1990
(51) Int. Cl.: B65G 47/82

(54) **Verteiler von Einzelstücken**
Distributor for single-pieces
Distributeur pour exemplaires isolés

(30) Priorität: 20.02.1989 CH 606/89
(43) Veröffentlichungstag der Anmeldung: 29.08.1990
(73) Patentinhaber: SIG Schweizerische Industrie-Gesellschaft, 8212 Neuhausen am Rheinfall (CH)
(72) Erfinder: Wipf, Alfred, D-7893 Jestetten 1 (DE)
(74) Vertreter: Schick, Carl

(56) Entgegenhaltungen:
- AT-B- 123 451
- US-A- 4 057 138
- US-A- 4 356 908

## Beschreibung

Die vorliegende Erfindung betrifft einen Verteiler von Einzelstücken gemäss dem Oberbegriff des Patentanspruchs 1.

Aus der DE-A- 25 51 538 ist eine Vorrichtung zum Zuführen und Einlegen von Einzelstücken in die Aufnahmetaschen der Förderkette einer Kartoniermaschine bekannt. Zu diesem Zweck ist eine Uebergabevorrichtung mit einer Vielzahl von Saugerwagen vorgesehen, welche mittels Armen um eine zentrale Achse angeordnet sind. Jeder Saugerwagen ist zur Aufnahme eines Einzelstücks mit einem Sauger sowie mit einem dem Steuern des Vakuums dienenden Ventilstössel versehen, wobei dieser durch das aufzunehmende Einzelstück betätigt wird, so dass die Saugluft freigegeben und das Einzelstück im Sauger festgehalten wird. Damit die auf dem Förderband der Zufuhrstrecke befindlichen Einzelstücke bei der Abgabe auf das Förderband der Aufnahmestrecke ihre Lage beibehalten, sind die Sauger um 90 Grad drehbar ausgebildet.

Die bekannte Uebergabevorrichtung, deren zentrale Achse senkrecht zu beiden Förderbändern angeordnet ist, bewirkt zwar eine einwandfreie Uebergabe der Einzelstücke von einer Geber maschine zu einer Kartoniermaschine, ist jedoch sehr aufwendig im Hinblick auf die Sauger, die um 90° drehbar ausgebildet sind und mit Vakuum arbeiten.

Aus der US-A- 4 356 908 ist eine Verteilereinrichtung die mit einer Platte zur Verschiebung der Einzelstücke versehener Riemantrieb arbeitet, bekannt.

Aus der US-A- 4,057,138 ist ferner eine Verteilereinrichtung für grosse Baumstämme bekannt, aus denen Sägemehl für die Papierfabrikation produziert wird. Diese Verteilereinrichtung ist mit mehreren koaxial angetriebenen Verteilervorrichtungen versehen, um die Baumstämme parallel zur Baumachse verschieben zu können. Eine solche Verteilereinrichtung ist nicht geeignet, um kleine Einzelstücke wie Schokoladeriegel zu transportieren.

Der vorliegenden Erfindung liegt daher die Aufgabe zugrunde, einen Verteiler von kleinen Einzelstücken mit einer weniger aufwendigen Uebergabevorrichtung zu schaffen.

Diese Aufgabe wird erfindungsgemäss durch einen Verteiler mit den im kennzeichnenden Teil des Patentanspruchs 1 angegebenen Merkmalen gelöst.

Andere vorteilhafte Ausgestaltungen der Erfindung sind in weiteren Ansprüchen angegeben.

Die Erfindung wird nachfolgend durch Beschreibung von Ausführungsbeispielen anhand einer Zeichnung näher beschrieben. Es zeigt:
- Fig. 1: eine schematische Darstellung eines erfindungsgemässen Verteilers,
- Fig. 2: eine Seitenansicht einer Uebergabevorrichtung zwischen zwei Förderern nach der Erfindung,
- Fig. 3: eine Draufsicht einer solchen Uebergabevorrichtung,
- Fig. 4: eine Querschnittdarstellung des Flügelrades einer Uebergabevorrichtung nach einer ersten Ausführung der Erfindung,
- Fig. 5: eine schematische Seitenansicht einer weiteren Ausführung einer Uebergabevorrichtung nach der Erfindung.

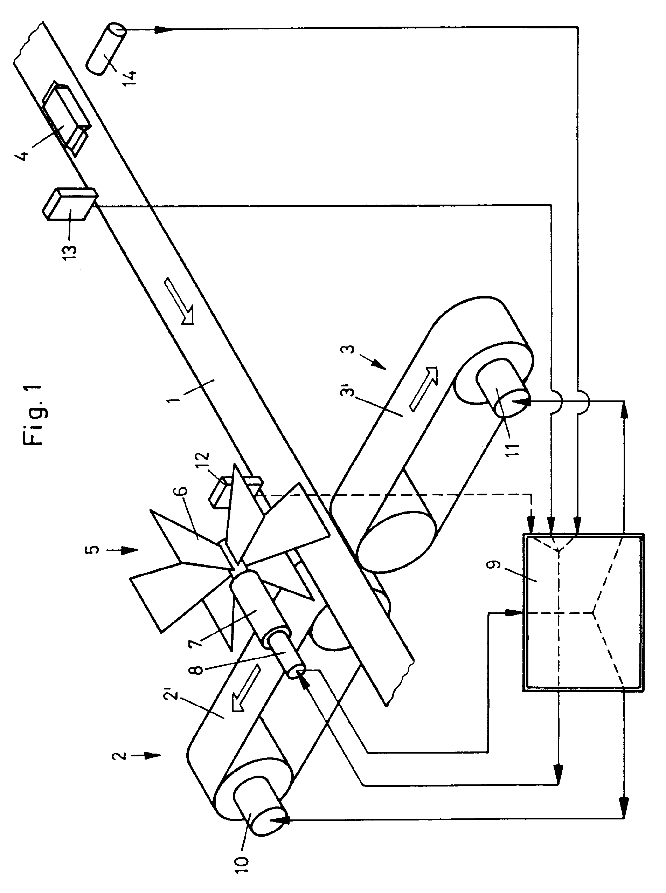

Der in Fig. 1 dargestellte Verteiler weist eine Förderbahn 1 auf, die zwischen zwei Förderern 2 und 3 in Bewegung gesetzt werden kann, wobei die Förderbahnen 2′ und 3′ der Förderer 2 bzw. 3 und die Förderbahn 1 sich zumindest angenähert in einer Ebene befinden. Auf der Förderbahn 1 liegt ein Einzelstück 4, beispielsweise ein verpackter Schokoladeriegel. Im Bereich zwischen den zwei Förderern 2 und 3, jedoch oberhalb derselben ist eine Uebergabevorrichtung 5 angeordnet, die ein Flügelrad 6, einen Servomotor 7 und einen Encoder 8 umfasst, der an einen Prozessor oder Rechner 9 angeschlossen ist, der auch Signale für einen Servomotor 10 des Förderers 2 und für einen Servomotor 11 des Förderers 3 liefert. Unmittelbar vor der Uebergabevorrichtung 5 in der Bewegungsrichtung der Förderbahn 1 ist ein Sensor 12 angeordnet; und vorzugsweise etwa 2 Stücklängen vor ihm befindet sich ein zweiter Sensor 13, wobei der Prozessor 9 sowohl an diese Sensoren 12 und 13 als auch an einen weiteren, mit der Förderbahn 1 synchronisierten Encoder 14 angeschlossen ist.

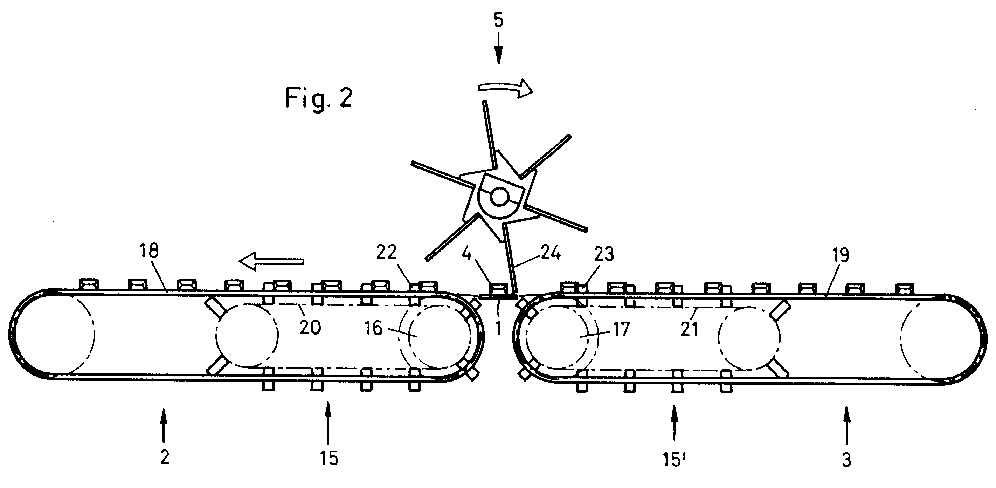

In Fig. 2 sind die Förderer 2 und 3 und die Uebergabevorrichtung 5 mit einigen Details dargestellt, um zu zeigen, dass die Förderer je einen Hilfsförderer 15, 15′ aufweisen. Der Förderer 2 und der Hilfsförderer 15 haben eine gemeinsame Rolle 16 mit vier Rillen oder Nuten, und zwar zwei mit dem Innendurchmesser D und zwei mit dem Innendurchmesser d, wobei D grösser als d ist. Entsprechendes gilt für eine Rolle 17 bezüglich der Förderer 3 und 15′. Die Förderer 2 und/oder 3 weisen vorzugsweise keine Förderbänder, sondern je zwei Rundriemen auf, von denen in der Fig. 2 nur je ein Rundriemen 18 bzw. 19 sichtbar ist, die in die Rillen mit dem Durchmesser D eingesetzt sind. Demgegenüber können die Hilfsförderer 15, 15′ je zwei Kettenriemen umfassen, die in die Rillen mit dem Durchmesser d eingesetzt sind, und von denen in der Fig. 2 nur je ein Kettenriemen 20 bzw. 21 sichtbar ist. Diese Kettenriemen sind mit Haltegliedern 22 bzw. 23 versehen, die vorzugsweise in regelmässigen Abständen verteilt sind. Die in Fig. 2 dargestellte Uebergabevorrichtung 5 weist ein Flügelrad mit sechs Flügeln auf, wobei die Kante des Flügels 24 sich in der Nähe eines auf der Förderbahn 1 liegenden Einzelstücks 4 befindet.

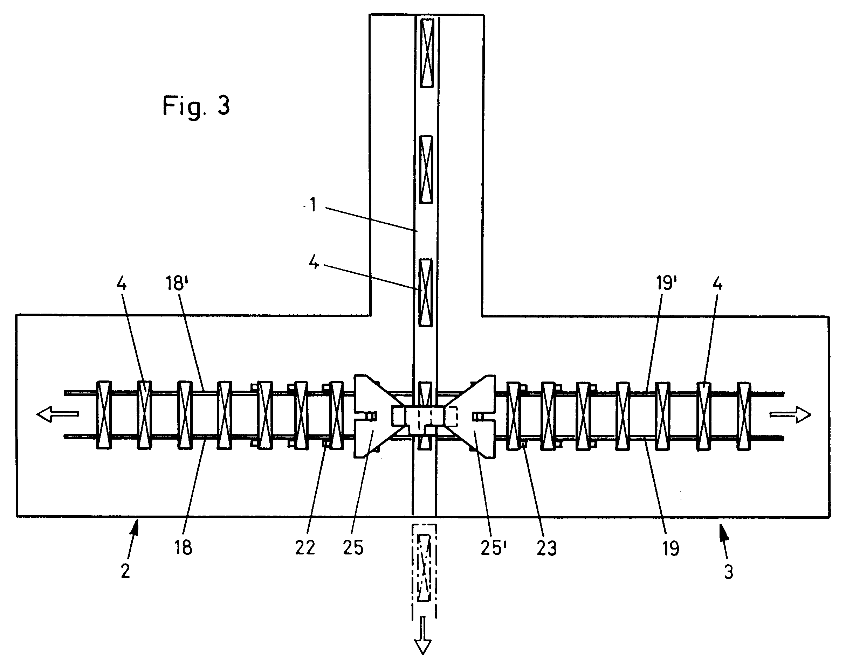

In Fig. 3 sind die zwei Rundriemenpaare 18, 18′ und 19, 19′ des Förderers 2 bzw. 3 und zur Vereinfachung der Zeichnung nur einige Halteglieder 22, 23 ohne die Kettenriemen dargestellt.

In der Ausführung nach Fig. 3 befinden sich die Halteglieder 22 ausserhalb der von den Rundriemen 18, 18′ bestimmten Fläche. Im Gegensatz dazu befinden sich die Halteglieder 22 nach Fig. 2 innerhalb der erwähnten Fläche, um anzudeuten, dass beide Ausführungsarten möglich sind, wobei anstelle von Rund- und Kettenriemen z.B. auch Keil- oder Flachriemen eingesetzt werden könnten. In Fig. 3 sind mehrere Einzelstücke 4 sowohl auf der Förderbahn oder dem Förderband 1 als auch auf den Riemenpaaren 18, 18′ und 19, 19′ dargestellt. Von der Uebergabevorrichtung sind in Fig. 3 nur zwei Flügel 25, 25′ sichtbar.

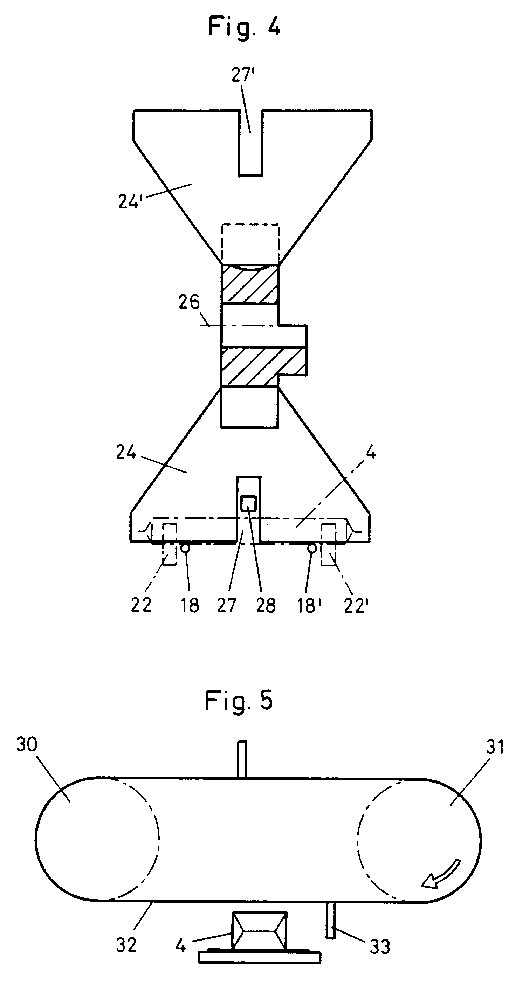

Ferner ist aus Fig. 4 ersichtlich, dass der Abstand zwischen der Achse 26 des Flügelrades und der äusseren Kante eines Flügels 24 etwas kleiner als der Abstand zwischen dieser Achse 26 und der von den Rundriemen 18, 18′ bestimmten Fläche ist, auf der die Einzelstücke 4 liegen. In Fig. 4 liegen die Halteglieder 22, 22′ aussenseitig in bezug auf die Rundriemen 18, 18′. Die Flügel weisen je einen mittig verlaufenden Schlitz 27, 27′ auf, um einen freien Raum für eine Führungsleiste 28 zu schaffen, die senkrecht zur Achse 26 und etwas oberhalb der Einzelstücke 4 angeordnet ist. Zur Vereinfachung der Zeichnung ist die fakultative Führungsleiste 28 in den Figuren 1 bis 3 nicht dargestellt. Diese Führungsleiste kann geradlinig oder zum Teil gebogen sein.

Der Verteiler nach den Figuren 1 bis 4 funktioniert nun folgendermassen:
Zunächst ist festzuhalten, dass der Verteiler auch mit nur einem der Förderer 2 oder 3 arbeiten kann, dass für einige Anwendungen der Sensor 12 entfällt, und dass das Flügelrad mindestens zwei Flügel oder einen Flügel und ein Gegengewicht aufweisen muss.

Durch die vom Encoder 14 gelieferten Signale kann der Prozessor 9 die Lage eines Referenzpunktes der Förderbahn 1 in jedem Moment bestimmen. Durch die vom Sensor 13 (Fig. 1) gelieferten Signale kann der Prozessor 9 bestimmen, wann die vordere Kante eines Einzelstücks 4 gerade beim Sensor 13 vorbeigeht. Mit diesen Angaben kann der Prozessor 9 dem Encoder 8 Signale liefern, die den Servomotor 7 derart steuert, dass ein Flügel 24 (Fig. 2) der Uebergabevorrichtung 5 gerade dann einem Einzelstück 4 einen Stoss gibt, wenn es sich in einer zentrierten Lage in bezug auf die Förderbahn 2′ befindet, so dass das Einzelstück auf der Förderbahn 2′ landet und von den Haltegliedern 22 gehalten wird. Dabei kann der Prozessor 9 auch den Servomotor 10 derart steuern, dass die Einzelstücke 4 in einem bestimmten Takt oder in vorbestimmten Abständen auf die Förderbahn 2′ gelangen. Der Sensor 12 dient zur Erfassung der Position der Stücke auf dem Zufuhrband oder der Förderbahn 1. Wenn nach Einschalten des Verteilers Stücke zwischen den zwei Sensoren 12 und 13 liegen, deren Position man nicht kennt, so werden sie durch den Sensor 12 erfasst und dann beispielsweise auf die Förderbahn 3′ gestossen, indem das Flügelrad 6 in die andere Richtung gedreht wird.

Der Prozessor 9 kann eine sogenannte Software-Schieberegister-Funktion wie folgt ausüben:
Sobald der Sensor 13 einen Stückanfang detektiert, wird eine Eins in das Register eingeschrieben, das momentan angezeigt wird. Seine Adresse wird in einem sogenannten Adress-Merker festgehalten und der Zähler gelöscht. Bei jedem Takt vom Encoder 14 wird der Zähler um eins erhöht und Leser und Schreiber um eine Adresse hinaufgeschoben. Registriert der Sensor 13 erneut einen Stückanfang, so wird der Zählerinhalt unter diejenige Adresse gespeichert, die im Adress-Merker steht, die neue Schreiberadresse wird im Adress-Merker festgehalten und der Zähler gelöscht. Der Leser liest nun nach einer Schieberegisterlänge die Werte, die der Schreiber hineingeschrieben hat. Liest der Leser eine Null, so wird nichts unternommen, liest er eine Zahl grösser als eins, so wird dies als ein Abstand zwischen zwei Stücken aufgefasst, woraus eine Uebersetzung für das elektronische Getriebe gerechnet werden muss. Liest der Leser eine Eins, so bedeutet das, dass immer noch kein neues Stück beim Sensor 13 angekommen ist. In diesem Fall läuft die Uebergabevorrichtung mit einer Geschwindigkeit, bei der eine Umdrehung dem mittleren Abstand zwischen den Stücken entspricht. Der entsprechende Wert wird vom Zähler subtrahiert und zur Adresse im Adress-Merker addiert. Die Eins im Schieberegister wird nun unter dieser neuen Adresse im Schieberegister gespeichert. Dabei muss bemerkt werden, dass das Flügelrad kontinuierlich drehen und nicht auf Geschwindigkeit null reduziert werden soll.

Der Verteiler kann beispielsweise drei Annäherungsschalter aufweisen, die bei der Positionierung der Motoren beim Einschalten oder bei einem Reset gebraucht werden.

Die Uebergabevorrichtung nach Fig. 5 weist einen offenen Riementrieb mit zwei Rollen 30, 31 auf, wobei am Riemen 32 mindestens ein Stift 33 befestigt ist. Der Riementrieb nach Fig. 5 wird quer über die Förderbahn 1 angeordnet, vorzugsweise derart, dass die Achsen der Rollen 30, 31 parallel zur Förderbahn 1 verlaufen. Der Riementrieb funktioniert in der Weise, dass in einem vorbestimmten Zeitpunkt der Stift 33 das Stück 4 von der Mitte der Förderbahn 1 auf die Förderbahn 2′ oder 3′ verschiebt.

Der erfindungsgemässe Verteiler kann nicht nur mit einem der Förderer 2 oder 3, sondern auch bei einer Leistungsaufteilung auf beide Förderer arbeiten.

Dabei ist auch eine Speicherfunktion möglich, indem Stücke, die sich auf einer der Förderbahnen 2′ oder 3′ befinden, über die stillstehende Förderbahn 1 auf die andere Förderbahn 3′ bzw. 2′ versetzt werden.

Der Verteiler ist reversibel, das heisst, die Förderbahn 1 kann nicht nur als Zufuhrbahn, sondern auch als Aufnahmebahn dienen.

Als Sensoren können beispielsweise Lichtschranken dienen.

## Patentansprüche

1. Verteiler von verpackten Einzelstücken mit einer drehbaren Uebergabevorrichtung zur Uebergabe von Einzelstücken, die auf einer ersten Förderbahn liegend befördert werden, an eine zweite Förderbahn, wobei die Drehachse der drehbaren Uebergabevorrichtung sich in einer zur ersten Förderbahn (1) parallelen Ebene befindet, dadurch gekennzeichnet,
dass die Uebergabevorrichtung sich mittig über einem Bereich der ersten Förderbahn (1) befindet, bei dem links und rechts dieser ersten Förderbahn (1) und senkrecht zu ihr, je eine zweite (2') bzw. eine dritte Förderbahn (3') angeordnet sind, dass ein Prozessor (9) vorhanden ist, der Signale zur Steuerung der Uebergabevorrichtung (5) und je eines Servomotors (10;11) für den Antrieb der zweiten bzw. der dritten Förderbahn (2';3') liefert, um ein Einzelstück (4) von der Mitte der ersten Förderbahn (1) auf die zweite oder auf die dritte Förderbahn (2′;3′) verschieben zu können,
und dass entweder die Uebergabevorrichtung (5) ein um eine Drehachse drehbares Flügelrad (6) mit mindestens einem radial angeordneten Flügel (24) umfasst, dessen Kante mindestens einen Schlitz (27) aufweist, um einen freien Raum für eine Führungsleiste (28) zu lassen, von der mindestens ein Teil sich oberhalb des für den Durchgang der Einzelstücke (4) vorgesehenen Raumes befindet und senkrecht zur Drehachse (26) des Flügelrades angeordnet ist, oder die Uebergabevorrichtung ein quer über die erste Förderbahn (1) angeordneter mit mindestens einem Stift (33) zur Verschiebung der Einzelstücke (4) versehener Riemenantrieb ist.

2. Verteiler nach Anspruch 1, dadurch gekennzeichnet, dass der Riemenantrieb zwei Rollen (30,31) umfasst, deren Achsen parallel zur ersten Förderbahn (1) verlaufen und eine Ebene bestimmen, wobei der Abstand zwischen dieser Ebene und der Förderebene der ersten Förderbahn angenähert gleich oder kleiner als der Durchmesser der Rollen (30,31) ist.

3. Verteiler nach Anspruch 1 oder 2, dadurch gekennzeichnet, dass er reversibel ist und eine Speicherfunktion ermöglicht, um Einzelstücke, die sich auf der linken bzw. rechten Förderbahn (2';3') befinden, über die stillstehende erste Förderbahn (1) auf die andere Förderbahn (3' bzw. 2') zu versetzen.

4. Verteiler nach einem der Ansprüche 1 bis 3, dadurch gekennzeichnet, dass die zweite und/oder die dritte Förderbahn (2′;3′) zwei parallel angetriebene Riemen (18,18′;19,19′) umfasst.

5. Verteiler nach Anspruch 4, dadurch gekennzeichnet, dass die zweite und/oder die dritte Förderbahn (2′;3′) Bestandteil eines Förderers (2,3) ist, der einen Hilfsförderer (15;15′) umfasst, dessen Riemen (20;21) mit Haltegliedern (22;23) versehen sind.

6. Verteiler nach einem der Ansprüche 1 bis 5, dadurch gekennzeichnet, dass die erste Förderbahn (1) kinematisch mit einem Encoder (14) verbunden ist.

7. Verteiler nach Anspruch 6, dadurch gekennzeichnet, dass der Prozessor (9) durch die von diesem ersten Encoder (14) gelieferten Signale in jedem Moment die Lage eines Referenzpunktes der ersten Förderbahn (1) bestimmt, dass der Prozessor (9) durch die von einem ersten Sensor (13) gelieferten Signale bestimmt, wann ein Einzelstück (4) gerade bei diesem ersten Sensor (13) vorbeigeht, und dass der Prozessor (9) mit diesen Angaben einem zweiten Encoder (8) Signale zur Steuerung der Uebergabevorrichtung (5) liefert.

8. Verteiler nach Anspruch 7, dadurch gekennzeichnet, dass unmittelbar vor der Uebergabevorrichtung (5) in der Bewegungsrichtung der ersten Förderbahn (1) ein zweiter an den Prozessor (9) angeschlossener Sensor (12) angeordnet ist, dass sich der erste Sensor (13) in einem Abstand vor dem zweiten Sensor (12) befindet, der zur Erfassung der Position der Einzelstücke auf der ersten Förderbahn (1) dient, wenn nach Einschalten des Verteilers Einzelstücke zwischen den zwei Sensoren (12,13) liegen, deren Position man nicht kennt, und dass solche Einzelstücke durch den zweiten Sensor (12) erfasst und auf eine seitliche Förderbahn (3′) gestossen werden, indem die Uebergabevorrichtung (5) in die andere Richtung gedreht wird.

9. Verteiler nach Anspruch 6, dadurch gekennzeichnet, dass der Ausgang mindestens eines Sensors (13), der ein Signal zur Erfassung der- Position eines Einzelstücks (4) auf der ersten Förderbahn (1) liefert, und der Ausgang dieses Encoders (14) mit dem Prozessor (9) verbunden sind.

## Claims

1. Transfer apparatus for packaged single items having a rotatable transfer device for transferring single items which are conveyed lying on a first conveyor belt onto a second conveyor belt, wherein the rotational axis of the rotatable transfer device is situated in a plane parallel to the first conveyor belt (1), characterised in that the transfer device is centrally situated over a region of the first conveyor belt (1), wherein on the left and right of this first conveyor belt (1) and perpendicular to it a second (2′) and a third (3′) conveyor belt are respectively disposed, that a processor (9) is provided which supplies signals for controlling the transfer device (5) and a respective servodrive (10;11) for driving the second and third conveyor belt (2′;3′) respectively in order to be able to displace a single item (4) from the centre of the first conveyor belt (1) onto the second or onto the third conveyor belt (2';3'), and that either the transfer device (5) comprises an impeller wheel (6), which is rotatable about a rotational axis, having at least one radially disposed arm (24) of which the edge comprises at least one slot (27) in order to leave a free space for a guide bead (28) of which at least a part is situated above the space provided for the passage of the single items (4) and is disposed perpendicular to the rotational axis (26) of the impeller wheel, or the transfer device is a belt drive disposed transversely over the first conveyor belt (1) and which belt drive is provided with at least one pin (33) to displace the individual items (4).

2. Transfer apparatus according to claim 1, characterised in that the belt drive comprises two rollers (30,31), the axes of which extend parallel to the first conveyor belt (1) and predetermine a plane, wherein the distance between this plane and the conveyor plane of the first conveyor belt is approximately equal to or is smaller than the diameter of the rollers (30,31).

3. Transfer apparatus according to claim 1 or 2, characterised in that it is reversible and renders possible a storage function in order to transfer single items, which are situated on the left or right conveyor belt (2′;3′), over the stationary first conveyor belt (1) onto the other conveyor belt (3′ or 2′).

4. Transfer apparatus according to one of claims 1 to 3, characterised in that the second and/or third conveyor belt (2′;3′) comprises two parallel driven belts (18,18′;19, 19′).

5. Transfer apparatus according to claim 4, characterised in that the second and/or third conveyor belt (2′; 3′) is a component part of a conveyor (2, 3) which comprises an additional conveyor (15;15′), the belts of which (20;21) are provided with retaining members (22;23).

6. Transfer apparatus according to one of claims 1 to 5, characterised in that the first conveyor belt (1) is kinematically connected to an encoder (14).

7. Transfer apparatus according to claim 6, characterised in that the processor (9) predetermines, by means of the signals supplied by this first encoder (14), the position at each moment of a reference point of the first conveyor belt (1), that the processor (9) predetermines, by means of the signals supplied by a first sensor (13), when a single item (4) has just passed by this first sensor (13), and that the processor (9) having this data supplies signals to a second encoder (8) in order to control the transfer device (5).

8. Transfer apparatus according to claim 7, characterised in that immediately in front of the transfer device (5) in the direction of movement of the first conveyor belt (1) a second sensor (12) is disposed which sensor 12 is connected at the processor (9), that the first sensor (13) is situated at a distance in front of the second sensor (12) which serves to detect the position of the single items on the rest of the conveyor belt (1) if, after the transfer apparatus is switched on, single items lie between the two sensors (12, 13) and their position is not known, and that such individual items are detected by the second sensor (12) and are pushed onto a side conveyor belt (3′) by rotating the transfer device (5) into the other direction.

9. Transfer apparatus according to claim 6, characterised in that the output of at least one sensor (13), which supplies a signal to detect the position of an individual item (4) on the first conveyor belt (1), and the output of this encoder (14) are connected to the processor (9).

## Revendications

1. Distributeur d'articles individuels empaquetés, comportant un dispositif rotatif de transfert pour transférer, sur un second chemin de transport, des articles individuels qui sont entraînés en position couchée sur un premier chemin de transport, l'axe de rotation du dispositif rotatif de transfert se trouvant dans un plan parallèle au premier chemin de transport (1), caractérisé en ce que
le dispositif de transfert se trouve au milieu au-dessus d'une région du premier chemin de transport (1) au niveau de laquelle sont disposés, respectivement à gauche et à droite de ce premier chemin de transport (1) et perpendiculairement à lui, un deuxième (2′) et un troisième chemin de transport (3′),
il est prévu un processeur (9) qui délivre des signaux pour la commande du dispositif de transfert (5) et de servomoteurs (10; 11) assurant respectivement l'entraînement du deuxième et du troisième chemin de transport (2′; 3′), pour qu'un article individuel (4) puisse être placé, à partir du milieu du premier chemin de transport (1) sur le deuxième ou sur le troisième chemin de transport (2′; 3′), et
ou bien le dispositif de transfert (5) comprend une roue à ailettes (6) qui peut tourner autour d'un axe de rotation et qui comporte au moins une ailette (24) disposée radialement, dont le bord présente au moins une entaille (27) pour laisser la place libre pour une barre de guidage (28) dont une partie au moins se trouve au-dessus de l'espace prévu pour le passage des articles individuels (4) et est disposée perpendiculairement à l'axe de rotation (26) de la roue à ailettes, ou bien le dispositif de transfert est une courroie d'entraînement qui est disposée transversalement au-dessus du premier chemin de transport (1) et qui est munie d'au moins une broche (33) pour la translation des articles individuels (4).

2. Distributeur selon la revendication 1, caractérisé en ce que la courroie d'entraînement comprend deux rouleaux (30, 31) dont les axes s'étendent parallèlement au premier chemin de transport (1) et définissent un plan, la distance entre ce plan et le plan de transport du premier chemin de transport étant approximativement égale ou inférieure au diamètre des rouleaux (30, 31).

3. Distributeur selon la revendication 1 ou 2, caractérisé en ce qu'il est réversible et rend possible une fonction d'accumulation pour que des articles individuels, qui se trouvent sur le chemin de transport gauche ou droit (2′; 3′), soient transférés sur l'autre chemin de transport (3′ ou 2′), de l'autre côté du premier chemin de transport (1) immobilisé.

4. Distributeur selon l'une quelconque des revendications 1 à 3, caractérisé en ce que le deuxième et/ou le troisième chemin de transport (2′; 3′) comprend deux courroies parallèles entraînées (18, 18′; 19, 19′).

5. Distributeur selon la revendication 4, caractérisé en ce que le deuxième et/ou le troisième chemin de transport (2′; 3′) fait partie d'un transporteur (2, 3) qui comprend un transporteur auxiliaire (15; 15′) dont les courroies (20; 21) sont munies d'organes de retenue (22; 23).

6. Distributeur selon l'une quelconque des revendications 1 à 5, caractérisé en ce que le premier chemin de transport (1) est accouplé cinématiquement à un codeur (14).

7. Distributeur selon la revendication 6, caractérisé en ce que le processeur (9) détermine à tout moment, par les signaux délivrés par ledit premier codeur (14), la position d'un point de référence du premier chemin de transport (1), en ce que le processeur (9) détermine, par les signaux délivrés par un premier détecteur (13), le moment auquel un article individuel (4) passe juste en regard de ce premier détecteur (13), et en ce qu'à partir de ces indications, le processeur (9) délivre à un second codeur (8) des signaux pour la commande du dispositif de transfert (5).

8. Distributeur selon la revendication 7, caractérisé en ce qu'un second détecteur (12) raccordé au processeur (9) est disposé immédiatement avant le dispositif de transfert (5) dans le sens de mouvement du premier chemin de transport (1), en ce que le premier détecteur (13) se trouve à une distance du second détecteur (12) qui sert à l'acquisition de la position des articles individuels sur le premier chemin de transport (1) lorsque, après la mise en marche du distributeur, il se trouve, entre les deux détecteurs (12, 13), des articles individuels dont la position est inconnue, et en ce que de tels articles individuels sont détectés par le second détecteur (12) et poussés sur un chemin de transport latéral (3′) par rotation du dispositif de transfert (5) dans l'autre sens.

9. Distributeur selon la revendication 6, caractérisé en ce que la sortie d'au moins un détecteur (13), qui délivre un signal pour l'acquisition de la position d'un article individuel (4) sur le premier chemin de transport (1), et la sortie dudit codeur (14) sont raccordées au processeur (9).
